# EUROPÄISCHE PATENTSCHRIFT

(11) **EP 0 524 330 B1**
(45) Veröffentlichungstag und Bekanntmachung des Hinweises auf die Patenterteilung: **30.11.1994**
(21) Anmeldenummer: 91112257.0
(22) Anmeldetag: 22.07.1991
(51) Int. Cl.: G05B 19/04, G08B 29/16, G01D 3/08

(54) **Verfahren zur Fehlererkennung und -lokalisierung von redundanten Signalgebern einer Automatisierungsanlage**
Process for fault recognition and location in redundant signal generating devices used in a automation system
Procédé pour l'identification et localisation de défauts des générateurs de signal dans un système d'automatisation

(43) Veröffentlichungstag der Anmeldung: 27.01.1993
(73) Patentinhaber: SIEMENS AKTIENGESELLSCHAFT, 80333 München (DE)
(72) Erfinder: Barthel, Herbert, Dipl.-Ing., W-8522 Herzogenaurach (DE); Höhn, Jochen, Dipl.-Ing. (FH), W-7514 Eggenstein-Leopoldshafen (DE)

(56) Entgegenhaltungen:
- EP-A- 0 034 839
- EP-A- 0 399 308
- WO-A-81/00774
- DE-A- 2 732 571
- GB-A- 2 012 092
- PATENT ABSTRACTS OF JAPAN vol. 10, no. 102 (P-448)(2159) 18. April 1986

## Beschreibung

Die Erfindung betrifft ein Verfahren zur Fehlererkennung und -lokalisierung von redundanten Signalgebern einer Automatisierungsanlage.

Bisher sind bei redundanten Automatisierungsanlagen nur Verfahren bekannt, aufgrund derer es möglich ist, typische Leitungsschäden zwischen Signalgebern und der Automatisierungsanlage, z.B. Kurzschluß oder Drahtbruch, zu erkennen und so bei redundanten Signalgebern das Signal des Gebers mit defekter Leitung zu ignorieren. Es sind bisher jedoch keine Verfahren bekannt, mit denen Fehler des Gebers selbst automatisch erkannt werden können. Dies führte bisher dazu, daß, je nachdem ob eine Anlage hochverfügbar oder sicherheitsrelevant ausgelegt war, der zu steuernde Prozeß entweder falsch gesteuert wurde, weil ein nicht erkannter Geberfehler vorlag, oder aber die Anlage in einen sicheren Zustand überführt und dort nach Möglichkeit stillgesetzt wurde, obwohl mittels des ordnungsgemäß funktionierenden anderen Gebers eine ordnungsgemäße Führung des technischen Prozesses möglich gewesen wäre. Schäden bzw. Produktionsausfälle waren die Folge.

Aus der GB-2 012 092 A ist ein Alarmsystem bekannt, bei dem ein lokaler Alarm ausgelöst wird, wenn mindestens einer von mehreren Sensoren anspricht, und ein globaler Alarm ausgelöst wird, wenn innerhalb einer vorgegebenen Zeitspanne mehrere der Sensoren ansprechen. Maßnahmen zur Detektion von Geberfehlern sind nicht vorgesehen.

Aus der EP-0 034 839 A1 ist ein Verfahren bekannt, bei dem die Signale von zwei Impulsdetektoren derart mit einander verknüpft werden, daß detektiert werden kann, ob einer der Detektoren defekt ist. Maßnahmen zur Detektion von Geberfehlern bei Einzelsignalgebern sind nicht offenbart.

Es ist Aufgabe der vorliegenden Erfindung, eine möglichst einfache Verfahrensweise anzugeben, mit der nicht nur Leitungsschäden, sondern auch Geberfehler mit hoher Wahrscheinlichkeit automatisch erkannt und lokalisiert werden können.

Die Aufgabe wird durch folgende Schritte gelöst:
- es wird der Ablauf einer Wartezeit angestoßen, wenn die von den Gebern gelieferten Signale wesentlich unterschiedliche Werte aufweisen;
- es wird ein Fehlersignal ausgegeben, wenn die von den Gebern gelieferten Signale auch nach Ablauf der Wartezeit wesentlich unterschiedliche Werte aufweisen;
- bei zweifach redundanten Signalgebern wird der eine Geber ermittelt, dessen Signal seinen Wert nicht verändert hat, und dieser Geber wird als fehlerhaft registriert;
- bei mindestens dreifach redundanten Signalgebern wird der eine Geber ermittelt, der nach Ablauf der Wartezeit ein zu den von den anderen Gebern gelieferten Signalen wesentlich unterschiedliches Signal liefert, und dieser Geber endgültig als fehlerhaft registriert.

Die Erfindung beruht auf der experimentell gesicherten Erkenntnis, daß der bei weitem häufigste Fehler von Signalgebern das Hängenbleiben in einem festen Zustand ist, d.h. daß sich das vom Signalgeber gelieferte Signal nicht mehr ändert.

Mit Vorteil wird bei zwei redundanten Signalgebern der als fehlerhaft registrierte Geber noch nicht endgültig als fehlerhaft registriert, da auch der andere Geber aufgrund einer Fehlfunktion sein Signal gewechselt haben könnte. Dies ist jedoch nur mit sehr geringer Wahrscheinlichkeit der Fall. Wenn aber der andere Geber erneut sein Signal ändert, bevor der als fehlerhaft registrierte Geber dem Signal des anderen Gebers gefolgt ist, wird der als fehlerhaft registrierte Geber mit Vorteil endgültig als fehlerhaft registriert. Das von diesem Geber gelieferte Signal wird für die Führung des Prozesses ignoriert, bis der Geber repariert bzw. ausgetauscht wird.

Wenn dagegen der eine Geber sein Signal nach Ablauf der Wartezeit, aber vor einem erneuten Signalwechsel des anderen Gebers ändert, insbesondere dem Signal des anderen Gebers im wesentlichen angleicht, wird der eine Geber als korrekt funktionierend und der andere Geber endgültig als fehlerhaft registriert. Die Verfügbarkeit und Zuverlässigkeit einer Anlage mit mindestens drei redundanten Gebern läßt sich auf ein Höchstmaß steigern, wenn nach der endgültigen Registrierung des einen Gebers als fehlerhaft die zwei anderen, ordnungsgemäß funktionierenden Geber gemäß einem Verfahren nach einem oder mehreren der Ansprüche 1 bis 6 überwacht werden.

Weitere Vorteile und Einzelheiten ergeben sich aus der nachfolgenden Beschreibung eines Ausführungsbeispiels, anhand der Zeichnungen und in Verbindung mit den weiteren Unteransprüchen. Es zeigen:

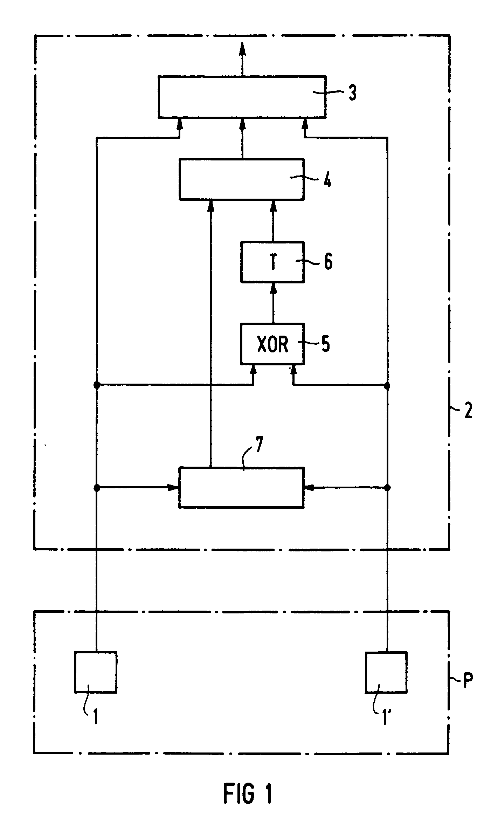

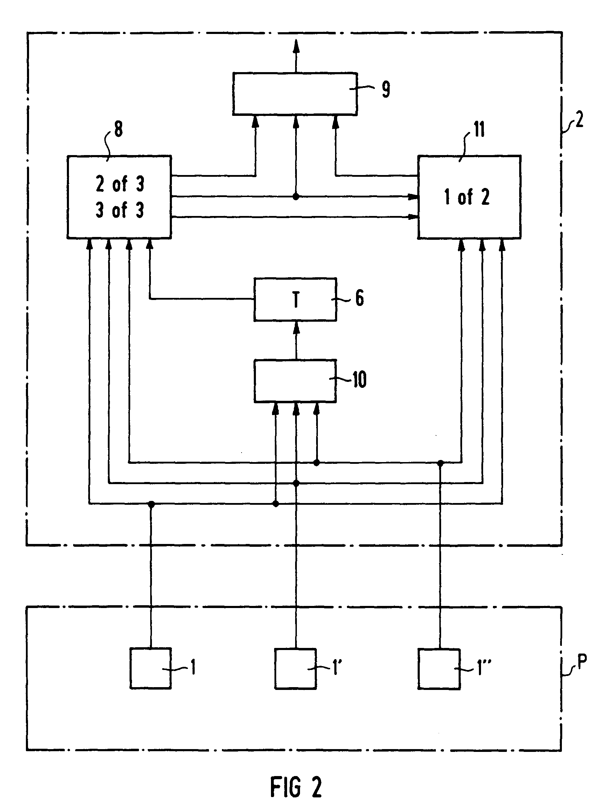

- FIG 1 und 2: ein Blockschaltbild zur Erkennung und Lokalisierung von Signalgeberfehlern bei zwei bzw. drei redundanten, digitalen Signalgebern.

Gemäß FIG 1 melden Zwei redundante, digitale Signalgeber 1, 1′ Zustandsignale über der Prozeß P an die Automatisierungsanlage 2. Wenn sich der Zustand des Prozesses P, der ein chemischer Prozeß, z.B. in der Pharma- oder der Petrochemie, sein kann, ändert, ändern sich die von den Signalgebern 1, 1′ an die Automatisierungsanlage 2 gelieferten Signale. Die Signale werden primär an die Auswerteschaltung 3 übermittelt, die aufgrund der von den Gebern 1, 1′ gelieferten Signale und des von der Fehlererkennungsschaltung 4 gelieferten Signals entscheidet, welches der von den Gebern 1, 1′ gelieferten Signale den Vorrang hat, wenn sich die Signale unterscheiden. Die Funktion der Fehlererkennungsschaltung 4 wird nachstehend noch erläutert werden.

Aufgrund von Bauteiltoleranzen und Laufzeitunterschieden sowie geringfügig anderem Ansprechverhalten der Geber 1, 1′ ändern sich die von den Gebern 1, 1′ gelieferten Signale nicht gleichzeitig. Im folgenden ist angenommen, daß der Geber 1 als erster sein Signal ändert.

Die Signaländerung des Gebers 1 wird im Unterschiedsdetektor 5, der z.B. ein XOR-Glied ist, registriert, und stößt dadurch den Ablauf der Wartezeit T im Zeitglied 6 an. Wenn die Wartezeit T abgelaufen ist, wird dieses Ablaufen der Wartezeit T an die Fehlererkennungsschaltung 4 übermittelt. Die Fehlererkennungsschaltung 4 liest daraufhin das vom Flankendetektor 7 übermittelte Signal ein. Dieses Signal kann drei Werte haben:
- Der Wert +1 wird übermittelt, wenn sich das Signal des Gebers 1 geändert hat und das des Gebers 1′ nicht.
- Der Wert -1 wird übermittelt, wenn sich das Signal des Gebers 1′ geändert hat und das des Gebers 1 nicht.
- Der Wert Null wird übermittelt, wenn entweder das Signal des Gebers 1′ dem Signal des Gebers 1 nachgefolgt ist oder aber wenn das Signal des Gebers 1 wieder zurückgesetzt wurde.

Ergänzend sei bemerkt, daß der Ablauf der Wartezeit T im Zeitglied 6 jedesmal erneut angestoßen wird, wenn eine erneute Ungleichheit zwischen den von den Gebern 1, 1′ gelieferten Signalen detektiert wird. Wenn also z.B. während des Laufens der Wartezeit T das Signal des Gebers 1′ nacheilt bzw. das Signal des Gebers 1 zurückgesetzt wird, beeinflußt das zwar das vom Flankendetektor 7 gelieferte Signal, nicht aber das Ablaufen der Wartezeit T. Wenn dagegen während des Laufens der Wartezeit T eine erneute Änderung stattfindet, diesmal z.B. beim Signalgeber 1′, wird der Ablauf der Wartezeit T erneut angestoßen. Wenn die Wartezeit T abläuft, ohne daß der Geber 1 sein Signal ebenfalls geändert hat oder das Signal des Gebers 1′ zurückgesetzt wurde, wird in diesem Fall selbstverständlich vom Flankendetektor 7 an die Fehlererkennungsschaltung 4 der Wert -1 übermittelt.

Die Fehlererkennungsschaltung 4 entscheidet nach Ablauf der Wartezeit T, welcher Wert, nämlich wieder 0, +1 oder -1 an die Auswerteschaltung 3 übermittelt wird.
- Wenn der Wert Null an die Auswerteschaltung 3 übermittelt wird, sind die von den Gebern 1, 1′ gelieferten Signale gleich. Je nach Anwendungsfall kann aber während der Wartezeit T z.B. auf eine Änderung sofort reagiert werden oder der Prozeß grundsätzlich nach dem kritischeren Signal geführt werden oder erst nach dem Ansprechen des zweiten Gebers reagiert werden.
- Wenn der Wert +1 bzw. -1 an die Auswerteschaltung 3 übermittelt wird, hat stets das vom Signalgeber 1 bzw. das vom Signalgeber 1′ gelieferte Signal den Vorrang. Das Signal des jeweils anderen Signalgebers wird ignoriert.

Wenn als tatsächlich gültiges Signal das geänderte Signal benützt wird, wird schon vor Ablauf der Wartezeit T das kritischere Signal zur weiteren Führung des Prozesses P bereitgestellt. Andererseits kann es passieren, daß bei sofortiger Steuerungsreaktion trotz prinzipiell korrekten Funktionierens der zweite Geber nicht mehr anspricht und daher wegen eines nur scheinbaren Fehlers als fehlerhaft registriert wird. Demgegenüber wird bei einer 2-von-2-Auswertung die Steuerungsreaktion erst nach Ansprechen des zweiten Gebers bzw. nach Ablauf der Wartezeit T eingeleitet, d.h. es kann nicht geschehen, daß fälschlicherweise der zweite Geber als fehlerhaft registriert wird.

In der Fehlererkennungsschaltung 4 wird registriert, ob einer der Geber 1, 1′ und ggf. welcher fehlerhaft ist. Diese Registrierung ist gemäß einer vorteilhaften Ausgestaltung der Erfindung jedoch nur vorläufig. Wenn sich nämlich nach Ablauf der Wartezeit T das Signal des als fehlerhaft registrierten Gebers erneut ändert, bevor sich das vom anderen Geber gelieferte Signal wieder ändert, wird angenommen, daß der zunächst als fehlerhaft registrierte Geber doch ordnungsgemäß funktioniert und der andere Geber fehlerhaft ist. In diesem Fall wird der zunächst als fehlerhaft registrierte Geber wieder als ordnungsgemäß funktionierend registriert und der andere Geber als fehlerhaft registriert. Diese Registrierung ist nunmehr aber endgültig.

Wenn dagegen der als ordnungsgemäß registrierte andere Geber sein Signal erneut ändert, bevor der als fehlerhaft registrierte Geber sein Signal geändert hat, wird die Registrierung des einen Gebers als fehlerhaft endgültig.

Obenstehend beschriebenes Verfahren wird bei der Verwendung von mindestens dreifach redundanten Gebern leicht abgeändert. FIG 2 zeigt die zugehörige Schaltung. Gleiche Bezugszeichen bedeuten dabei die gleichen Elemente wie zuvor bei FIG 1 beschrieben.

Der zu führende Prozeß P wird nunmehr von drei redundanten Gebern 1, 1′, 1˝ überwacht. Die drei von den Gebern 1, 1′, 1˝ gelieferten Signale werden in die Auswerteschaltung 8 eingegeben, die das tatsächlich gültige Signal aufgrund einer 2-von-3 oder aufgrund einer 3-von-3-Entscheidung ermittelt. Diese Entscheidung wird an die Weitergabeschaltung 9 übermittelt. Weiterhin wird jede Änderung eines der von den Gebern 1, 1′, 1˝ gelieferten Eingangssignale im Unterschiedsdetektor 10 detektiert und immer dann, wenn die von den Gebern 1, 1′, 1˝ gelieferten Signale nicht gleich sind, der Ablauf der Wartezeit T im Zeitglied 6 erneut angestoßen.

Wenn die Wartezeit T abgelaufen ist, wird dies an die Auswerteschaltung 8 gemeldet. Wenn zu diesem Zeitpunkt die von den Gebern 1, 1′ , 1˝ gelieferten Signale nicht gleich sind, wird eine Mehrheitsentscheidung getroffen, d. h. es wird der eine Geber ermittelt, der nach Ablauf der Wartezeit T ein zu den von den anderen Gebern gelieferten Signalen unterschiedliches Signal liefert. Daraufhin passiviert sich die Auswerteschaltung 8 und meldet dies an die Schaltungen 9 und 11. Weiterhin wird an die Logikschaltung 11 übermittelt, welcher der Geber 1, 1′, 1˝ fehlerhaft ist. Aufgrund der Passivierungsmeldung der Auswerteschaltung 8 an die Weitergabeschaltung 9 wird von der Weitergabeschaltung 9 ab sofort nicht mehr das von der Auswerteschaltung 8 gelieferte Signal, sondern das von der Logikschaltung 11 gelieferte Signal verwertet. Die Logikschaltung 11 wird durch die Passivierungsmeldung der Auswerteschaltung 8 aktiviert. In ihr werden die von den beiden ordnungsgemäß funktionierenden Gebern gelieferten Signale gemäß dem bei FIG 1 beschriebenen Verfahren verarbeitet.

Im Ergebnis wird dadurch erreicht, daß nicht nur einer sondern nacheinander sogar zwei der Geber 1, 1′, 1˝ ausfallen können und trotzdem der Prozeß sicher geführt wird.

Wenn das tatsächlich gültige Signal aufgrund einer 2-von-3-Entscheidung ermittelt wird, wird schon vor Ablauf der Wartezeit T das Majoritätsergebnis zur weiteren Führung des Prozesses P bereitgestellt. Andererseits kann es passieren, daß bei sofortiger Steuerungsreaktion trotz prinzipiell korrekten Funktionierens der dritte Geber nicht mehr anspricht und daher wegen eines nur scheinbaren Fehlers als fehlerhaft registriert wird. Demgegenüber wird bei einer 3-von-3-Auswertung die Steuerungsreaktion erst nach Ansprechen des dritten Gebers bzw. nach Ablauf der Wartezeit T eingeleitet, d.h. es kann nicht geschehen, daß fälschlicherweise einer der Geber als fehlerhaft registriert wird.

Die vorstehend beschriebenen Verfahren sind selbstverständlich nicht nur bei digitalen Gebern 1, 1′, 1˝ anwendbar, sondern auch bei analogen Gebern. In diesem Fall müssen die Unterschiedsdetektoren 5, 10 derart konzipiert sein, daß sie eine geringe Signalabweichung, die bei Analog-Signalen unvermeidbar sind, tolerieren, ohne das Ablaufen der Wartezeit T auszulösen. Die Toleranzschwelle liegt in der Regel zwischen 1 und 10% des maximal zulässigen Wertes, typisch bei 5 %. Weiterhin wird die Flankenzählung der von digitalen Gebern gelieferten Signale derart abgeändert, daß die Signale differenziert werden, also die Änderungsgeschwindigkeiten der von den Gebern gelieferten Signale detektiert werden, und auf Wechsel eines Signals erkannt wird, wenn die zu diesem Signal gehörige Änderungsgeschwindigkeit einen vorwählbaren Wert übersteigt. Wenn mehrere Signale gleichzeitig eine Änderungsgeschwindigkeit aufweisen, die diesen vorwählbaren Wert übersteigt, können entweder alle Signale, die normalerweise als sich ändernd registriert würden, als geändert registriert werden oder aber nur das Signal mit der betragsmäßig größten Änderungsgeschwindigkeit.

Ergänzend sei noch auf folgende vorteilhafte Ausgestaltungen der Erfindung hingewiesen:

Mit Vorteil sollten nicht alle vom Prozeß gelieferten Signale redundant verarbeitet werden, sondern nur die sicherheits- bzw. verfügbarkeitsrelevanten Signale. Dadurch werden die Kosten für die Automatisierungsanlage 2, der Aufwand für die Installation der Anlage 2 und die Reaktionszeit der Anlage 2 auf geänderte Prozeßzustände minimiert.

Wenn ein Geber als fehlerhaft registriert wird, sollte selbstverständlich eine Meldung an den Benutzer erfolgen, z.B. der Form "Geber 1 defekt, falls bei manueller Überprüfung Geber 1 korrekt funktioniert, sofort Geber 1′ überprüfen".

Wenn man einen einzelnen Geber verwendet, dessen Signal mehreren Baugruppen der Automatisierungsanlage 2 in identischer Form zugeführt wird, ist eine Überprüfung der Baugruppen während des Betriebs möglich. Da die Baugruppen nämlich identische Eingangssignale erhalten, müßten sie auch in gleicher Weise reagieren. Wenn sie das nicht tun, muß eine Fehlfunktion vorliegen. Die Kriterien zur Auswahl der fehlerhaften Baugruppe sind die gleichen wie die zur Auswahl eines fehlerhaften Gebers.

Es werden auch Leitungsschäden detektiert. Eigenständige Verfahren zum Erkennen von Leitungsschäden werden also nicht mehr benötigt.

Wenn die von der Automatisierungsanlage 2 an den Prozeß P gelieferten Steuersignale über redundante Prozeßsignalformer an den Prozeß ausgegeben werden und die Ausgabesignale wieder in die Automatisierungsanlage 2 zurückgeführt werden, ist eine ähnliche Überprüfung der Prozeßsignalformer wie zuvor für die obenstehend beschriebenen Signalgeber möglich. Das Wort "Signalgeber" bzw. "Geber" im Sinne der vorliegenden Erfindung umfaßt also sowohl Geber, die Signale vom Prozeß P in die Automatisierungseinlage 2 eingeben, als auch Geber, die Signale von der Automatisierungsanlage 2 an den Prozeß P ausgeben.

Mit besonderem Vorteil besteht die Automatisierungsanlage 2 aus zwei redundanten Zentralgeräten, wobei an beide Zentralgeräte ein nur in Verbindung mit einem Zentralgerät funktionsfähiges Erweiterungsgerät angeschlossen ist. An jedes der drei Geräte ist einer der Geber 1, 1′, 1˝ angeschlossen. Durch entsprechende Kopplung und Synchronisierung der Geräte untereinander kann erreicht werden, daß sowohl ein Ausfall von einem oder zwei Gebern als auch der Ausfall von einem Zentralgerät sowie dem Erweiterungsgerät verkraftet werden kann, ohne den Prozeß P stillegen zu müssen.

Typische Anwendungsfälle für die vorliegende Erfindung sind z.B. der Fließbandbetrieb, wie er u.a. in der Autoindustrie und auf Flughäfen anzutreffen ist, die Gebäudeautomatisierung und die Prozeßautomatisierung in der Glasindustrie. Speziell in der Glasindustrie, in der zum Teil sehr langsame, thermische Prozesse ablaufen, kann es sinnvoll sein, die Wartezeit T, die mindestens 10 ms, bei anderen Anwendungsfällen typisch 50 ms beträgt, so groß zu parametrieren, daß sie etliche Sekunden, z.B. bis über 30 Sekunden beträgt.

## Patentansprüche

1. Verfahren zur Fehlererkennung und -lokalisierung von zweifach redundanten Signalgebern (1,1′) einer Automatisierungsanlage (2), insbesondere einer in der chemischen Industrie, z.B. der petrochemischen Industrie, eingesetzten Automatisierungsanlage (2), mit folgenden Schritten:
- es wird der Ablauf einer Wartezeit (T) angestoßen, wenn die von den Gebern (1,1′) gelieferten Signale wesentlich unterschiedliche Werte aufweisen;
- es wird ein Fehlersignal ausgegeben, wenn die von den Gebern (1,1′) gelieferten Signale auch nach Ablauf der Wartezeit (T) wesentlich unterschiedliche Werte aufweisen;
- es wird der eine Geber (z.B. 1′) ermittelt, dessen Signal seinen Wert nicht verändert hat; und
- dieser Geber (1′) wird als fehlerhaft registriert.

2. Verfahren nach Anspruch 1, **dadurch gekennzeichnet**, daß der Ablauf der Wartezeit (T) bei jeder neu auftretenden Signalungleichheit erneut angestoßen wird.

3. Verfahren nach Anspruch 1 oder 2, **dadurch gekennzeichnet**, daß der eine Geber (1′) endgültig als fehlerhaft registriert wird, wenn sich das vom anderen Geber (1) gelieferte Signal erneut ändert, bevor sich das vom einen Geber (1′) gelieferte Signal ändert.

4. Verfahren nach Anspruch 1, 2 oder 3, **dadurch gekennzeichnet**, daß der eine Geber (1′) wieder als korrekt funktionierend und der andere Geber (1) endgültig als fehlerhaft registriert wird, wenn der eine Geber (1′) sein Signal nach Ablauf der Wartezeit (T), aber vor einem erneuten Signalwechsel des anderen Gebers (1) ändert, insbesondere dem Signal des anderen Gebers (1) im wesentlichen angleicht.

5. Verfahren nach Anspruch 1, 2, 3 oder 4, **dadurch gekennzeichnet**, daß die von den Gebern (1,1′) gelieferten Signale Digitalsignale sind, daß die Flankenwechsel der von den Gebern (1,1′) gelieferten Signale detektiert werden und aufgrund der detektierten Flankenwechsel entschieden wird, welcher Geber einen Signalwechsel ausgeführt hat.

6. Verfahren nach Anspruch 1, 2, 3 oder 4, **dadurch gekennzeichnet**, daß die von den Gebern (1,1′) gelieferten Signale Analogsignale sind, daß die Änderungsgeschwindigkeiten der von den Gebern (1,1′) gelieferten Signale detektiert werden und auf Wechsel eines Signals erkannt wird, wenn die zugehörige Änderungsgeschwindigkeit einen vorwählbaren Wert übersteigt.

7. Verfahren zur Fehlererkennung und -lokalisierung von mindestens dreifach redundanten Signalgebern (1,1′ ,1˝) einer Automatisierungsanlage (2), insbesondere einer in der chemischen Industrie, z.B. der petrochemischen Industrie, eingesetzten Automatisierungsanlage (2), mit folgenden Schritten:
- es wird der Ablauf einer Wartezeit (T) angestoßen, wenn die von den Gebern (1,1′ ,1˝) gelieferten Signale wesentlich unterschiedliche Werte aufweisen;
- es wird ein Fehlersignal ausgegeben, wenn die von den Gebern (1,1′ ,1˝) gelieferten Signale auch nach Ablauf der Wartezeit (T) wesentlich unterschiedliche Werte aufweisen;
- es wird der eine Geber (z.B. 1) ermittelt, der nach Ablauf der Wartezeit (T) ein zu den von den anderen Gebern (1′ ,1˝) gelieferten Signalen wesentlich unterschiedliches Signal liefert; und
- dieser Geber (1) wird endgültig als fehlerhaft registriert.

8. Verfahren nach Anspruch 7, **dadurch gekennzeichnet**, daß der Ablauf der Wartezeit (T) bei jeder neu auftretenden Signalungleichheit erneut angestoßen wird.

9. Verfahren nach Anspruch 7 oder 8, **dadurch gekennzeichnet**, daß nach der endgültigen Registrierung des einen Gebers (1) als fehlerhaft die zwei anderen, ordnungsgemäß funktionierenden Geber (1′ ,1˝) gemäß einem Verfahren nach einem oder mehreren der Ansprüche 1 bis 6 überwacht werden.

10. Verfahren nach einem oder mehreren der obigen Ansprüche, **dadurch gekennzeichnet**, daß vor Ablauf der Wartezeit (T) nur bei Gleichheit der von den nicht als fehlerhaft registrierten Gebern (1,1′ ,1˝) gelieferten Signale eine Steuerungsreaktion eingeleitet wird.

11. Verfahren nach einem oder mehreren der obigen Ansprüche, **dadurch gekennzeichnet**, daß die Wartezeit (T) mindestens 10 ms, typisch ca. 50 ms, beträgt.

## Claims

1. A method of detecting and localising faults in doubly redundant signal detectors (1, 1′) of an automation system (2), in particular an automation system (2) used in the chemical industry, for example the petrochemical industry, comprising the following steps:
- the elapse of a waiting time (T) is started when the signals supplied by the detectors (1, 1′) possess substantially different values;
- an error signal is output when the signals supplied by the detectors (1, 1′) also possess substantially different values after the expiration of the waiting time (T);
- the one detector (e.g. 1′) whose signal has not changed its value is determined; and
- this detector (1′) is registered as defective.

2. A method as claimed in Claim 1, characterised in that the elapse of the waiting time (T) is restarted with each reoccurring signal inequality.

3. A method as claimed in Claim 1 or 2, characterised in that the one detector (1′) is definitively registered as defective when the signal supplied by the other detector (1) changes again before the signal supplied by the one detector (1′) changes.

4. A method as claimed in Claim 1, 2 or 3, characterised in that the one detector (1′) is registered again as functioning correctly and the other detector (1) is definitively registered as defective when the one detector (1′) changes its signal after the expiration of the waiting time (T) but before a further signal change of the other detector (1), in particular substantially approximates the signal of the other detector (1).

5. A method as claimed in Claim 1, 2, 3 or 4, characterised in that the signals supplied by the detectors (1, 1′) are digital signals, that the edge changes of the signals supplied by the detectors (1, 1′) are detected and as a result of the detected edge changes it is decided which detector has carried out a signal change.

6. A method as claimed in Claim 1, 2, 3 or 4, characterised in that the signals supplied by the detectors 1, 1′) are analogue signals, that the rates of change of the signals supplied by the detectors (1, 1′) are detected and in the event of a change in a signal it is recognised when the associated rate of change exceeds a preselectable value.

7. A method of detecting and localising faults in at least triply redundant detectors (1, 1′, 1˝) of an automation system (2), in particular an automation system (2) used in the chemical industry, for example the petrochemical industry, comprising the following steps:
- the elapse of a waiting time (T) is started when the signals supplied by the detectors (1, 1′, 1˝) possess substantially different values;
- an error signal is output when the signals supplied by the detectors (1, 1′, 1˝) also possess substantially different values after the expiration of the waiting time (T);
- the one detector (e.g. 1) which, after the expiration of the waiting time (T), supplies a signal substantially different from the signals supplied by the other detectors (1′, 1˝) is determined; and
- this detector (1) is definitively registered as defective.

8. A method as claimed in Claim 7, characterised in that the elapse of the waiting time (T) is restarted with each reoccurring signal inequality.

9. A method as claimed in Claim 7 or 8, characterised in that after the definitive registration of the one detector (1) as defective, the two other correctly functioning detectors (1′, 1˝) are monitored in accordance with a method claimed in one or more of Claims 1 to 6.

10. A method as claimed in one or more of the above claims, characterised in that prior to the expiration of the waiting time (T) only in the event of the equality of the signals supplied by the detectors (1, 1′, 1˝) not registered as defective is a control reaction initiated.

11. A method as claimed in one or more of the above claims, characterised in that the waiting time (T) amounts to at least 10 ms, and typically approximately 50 ms.

## Revendications

1. Procédé d'identification et de localisation de défauts dans des générateurs de signaux (1,1′), doublement redondants, d'une installation d'automatisation (2), notamment d'une installation d'automatisation (2) utilisée dans l'industrie chimique, notamment dans l'industrie pétrochimique, présentant les étapes opératoires suivantes :
- on attend l'écoulement d'un temps d'attente (T), lorsque les signaux délivrés par les générateurs (1,1′) possèdent des valeurs nettement différentes;
- un signal d'erreur est délivré lorsque les signaux délivrés par les générateurs (1,1′) possèdent également, après l'écoulement du temps d'attente (T), des valeurs nettement différentes;
- on détermine quel est le générateur (par exemple 1′), dont la valeur du signal n'a pas changé; et
- ce générateur (1′) est enregistré comme étant défectueux.

2. Procédé suivant la revendication 1, caractérisé par le fait qu'on attend à nouveau l'écoulement du temps d'attente (T) lors de chaque inégalité nouvellement apparue entre les signaux.

3. Procédé suivant la revendication 1 ou 2, caractérisé par le fait que le générateur (1′) enregistré comme étant défectueux est enregistré finalement comme étant défectueux lorsque le signal délivré par l' autre générateur (1) change à nouveau avant que le signal délivré par le premier générateur (1′) change.

4. Procédé suivant la revendication 1, 2 ou 3, caractérisé par le fait que le générateur (1′) enregistré comme étant défectueux est enregistré à nouveau comme fonctionnant de façon correcte et que l'autre générateur (1) est enregistré finalement comme étant défectueux lorsque le signal du premier générateur (1′) change après l'écoulement d'attente du temps (T), mais avant un nouveau changement de signal de l'autre générateur (1), notamment lorsque le signal du premier générateur devient sensiblement égal au signal de l'autre générateur (1).

5. Procédé suivant la revendication 1, 2, 3 ou 4, caractérisé par le fait que les signaux délivrés par les générateurs (1,1′) sont des signaux numériques, que les changements des flancs des signaux délivrés par les générateurs (1, 1′) sont, détectées et que sur la base des changements détectés des flancs, une décision est prise indiquant quel générateur a été le siège d'un changement de signal.

6. Procédé suivant la revendication 1, 2, 3 ou 4, caractérisé par le fait que les signaux délivrés par les générateurs (1,1′) sont des signaux analogiques et que les vitesses de changement des signaux délivrés par les générateurs (1,1′) sont détectés et on identifie au changement d'un signal le fait que la vitesse associée de changement dépasse une valeur pouvant être présélectionnée.

7. Procédé d'identification et de localisation de défauts de générateurs de signaux (1,1′,1˝) au moins trois fois redondants, d'une installation d'automatisation (2), notamment d'une installation d'automatisation (2) utilisée dans l'industrie chimique, notamment dans l'industrie pétrochimique, comprenant les étapes opératoires suivantes :
- on attend l'écoulement d'un temps d'attente (T), lorsque les signaux délivrés par les générateurs (1,1′,1˝) possèdent des valeurs nettement différentes;
- un signal d'erreur est délivré, lorsque les signaux délivrés par les générateurs (1,1′,1˝) possèdent également, après l'écoulement du temps d'attente (T), des valeurs nettement différentes;
- on détermine quel est le générateur (par exemple 1), qui, après l'écoulement du temps d'attente (T), délivre un signal nettement différent des signaux délivrés par les autres générateurs (1,1′,1˝); et
- ce générateur (1) est enregistré finalement comme étant défectueux.

8. Procédé suivant la revendication 7, caractérisé par le fait qu'on attend à nouveau l'écoulement du temps d'attente (T) lors de chaque inégalité entre les signaux, qui apparaît à nouveau.

9. Procédé suviant la revendication 7 ou 8, caractérisé par le fait qu'après l'enregistrement final d'un générateur (1) comme défectueux, les deux autres générateurs (1′,1˝), qui fonctionnent correctement, sont contrôlés conformément à un procédé selon une ou plusieurs des revendications 1 à 6.

10. Procédé suivant une ou plusieurs des revendications précédentes, caractérisé par le fait qu'avant l'écoulement du temps d'attente (T), une réaction de commande est déclenchée uniquement en cas d'égalité des signaux délivrés par les générateurs (1,1′,1˝) enregistrés comme n'étant pas défectueux.

11. Procédé suivant une ou plusieurs de revendications précédentes, caractérisé par le fait que le temps d'attente (T) est égal au moins à 10 ms et de façon typique à environ 50 ms.
